# EUROPEAN PATENT APPLICATION

(11) **EP 1 051 899 A2**
(43) Date of publication of application: **15.11.2000**
(21) Application number: 00110133.6
(22) Date of filing: 11.05.2000
(51) Int. Cl.: A01D 46/24

(54) **Harvesting tool, particularly for gathering olives or similar agricultural products**

(30) Priority: 13.05.1999 IT PD990102; 11.11.1999 IT PD990251
(71) Applicant: Zanon S.n.c. di Zanon Franco E C., 35011 Campodarsego (Padova) (IT)
(72) Inventor: Fabris, Renato, 35010 Limena, (Province of Padova) (IT); Zanon, Franco, 35011 Campodarsego, (Padova) (IT)
(74) Representative: Modiano, Guido, Dr.-Ing.

(57) **Abstract**

A harvesting tool, particularly for gathering olives or similar agricultural products, comprising two mutually opposite oscillating sectors (12) which are articulated to a supporting body (11) and are connected to actuation means (13), a corresponding plurality of rods (14) being fixed to each sector (12) in a rake-like arrangement, the tool being characterized in that the body (11) comprises three sections: a first section (15) for supporting the sectors (12); a second section (16) for coupling to the actuation means (13); and a third section (17) for connection to a handling pole (18) which is articulated by way of a hinge-type articulation (19) of corresponding connected portions, an internal duct (20) for the passage of supply air for the actuation means (13), which are constituted by at least one pneumatic cylinder (21), being formed in the articulation (19).

## Description

The present invention relates to a harvesting tool, particularly for knocking down or gathering olives or similar agricultural products.

It is known that gathering of olives is at least partially automated by using devices which, despite the variety of their embodiments, all comprise two mutually opposite oscillating sectors which are articulated to a supporting body and are connected to actuation means.

Each one of said sectors has a corresponding rake-like plurality of rods which, as they move, grip the agricultural product (typically olives).

Although they achieve their functional tasks, the devices currently in use are not devoid of drawbacks, the foremost being excessive stress on the actuation means, which are also subjected to stresses which are not strictly linked to their function.

Moreover, commercially available devices are often unbalanced from the point of view of mass distribution with respect to the handling pole and therefore require the operator to perform significant physical efforts.

The aim of the present invention is to provide a harvesting tool, particularly for knocking down or gathering olives or similar agricultural products, which solves the above-described drawbacks in currently commercially available tools having the same functions, and which in particular is provided with a structure which is balanced from the point of view of masses and allows easy operation without particular efforts for the operator.

Within the scope of this aim, an important object of the present invention is to provide a tool in which the actuation means are actuated practically exclusively with regard to their particular movement function.

Another object of the present invention is to provide a tool which is functionally valid, constructively simple and reliable as a whole.

Another object of the present invention is to provide a tool which is highly flexible in use.

Another object of the present invention is to provide a tool which can be manufactured with conventional technologies and at costs which are competitive with respect to tools having similar functions.

These and other objects which will become better apparent hereinafter are achieved by a harvesting tool, particularly for gathering olives or similar agricultural products, of the type that comprises two mutually opposite oscillating sectors which are articulated to a supporting body and are connected to actuation means, a corresponding series of rods being fixed to each one of said sectors in a rake-like arrangement, said tool being characterized in that said body comprises three sections: a first section for supporting said sectors; a second section for coupling to said actuation means; and a third section for connection to a handling pole which is articulated by way of a hinge-type articulation including an internal duct for the passage of supply air for said actuation means, which are constituted by at least one pneumatic cylinder.

Further characteristics and advantages of the present invention will become better apparent from the following detailed description of an embodiment thereof, illustrated only by way of non-limitative example in the accompanying drawings, wherein:

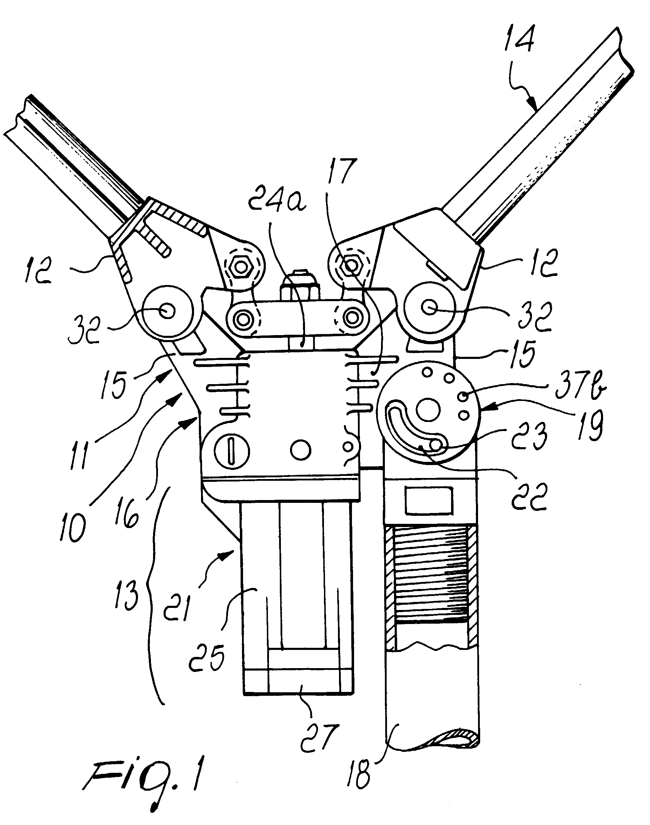

Figure 1 is a general partially sectional orthographic projection view of a tool according to the present invention;
Figure 2 is a sectional orthographic projection view of a detail of the actuation means included in the tool of Figure 1;
Figure 3 is a sectional orthographic projection view of another detail of the articulation of the tool of Figure 1 with respect to the handling pole;

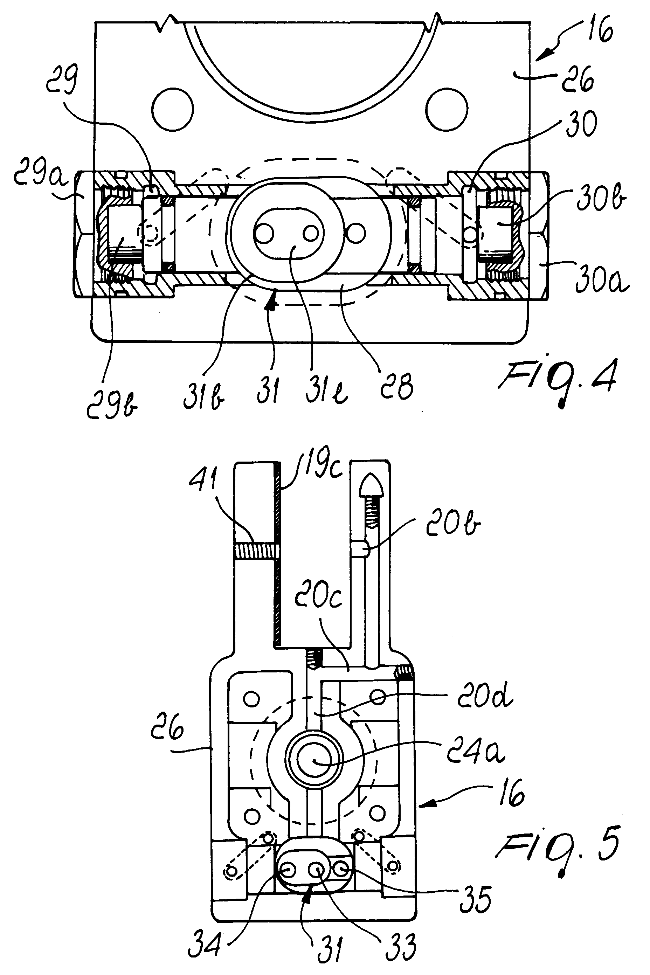

Figures 4 and 5 are sectional orthographic projection views of the seat of the slide valve for the air supply of the actuator of the tool of Figure 1;
Figure 6 is a view of the tool, taken at right angles to the view of Figure 1;

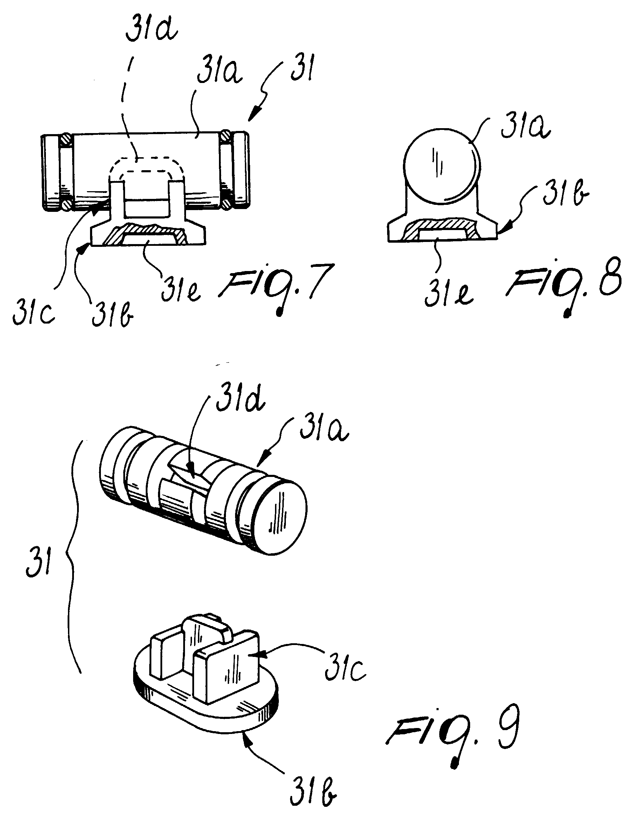

Figures 7 and 8 are two views of a moving slide valve included in the tool;
Figure 9 is an exploded perspective view of the slide valve of Figures 7 and 8.

With particular reference to the above figures, a harvesting tool, particularly for knocking down or gathering olives or similar agricultural products, according to the present invention, is generally designated by the reference numeral 10.

In particular, the tool 10 comprises two mutually opposite oscillating sectors 12 which are articulated to a supporting body 11 made of an engineering polymer and are connected to actuation means, generally designated by the reference numeral 13, to each of which a corresponding rake-like plurality of rods 14 is fixed.

The body 11 made of engineering polymer comprises, in this case, three sections: a first section 15 for the articulation of said sectors 12; a second section 16 for coupling to the actuation means 13; and a third section 17 for connection to a handling pole 18.

The pole 18 and the third section 17 are mutually articulated by way of a hinge-like articulation 19.

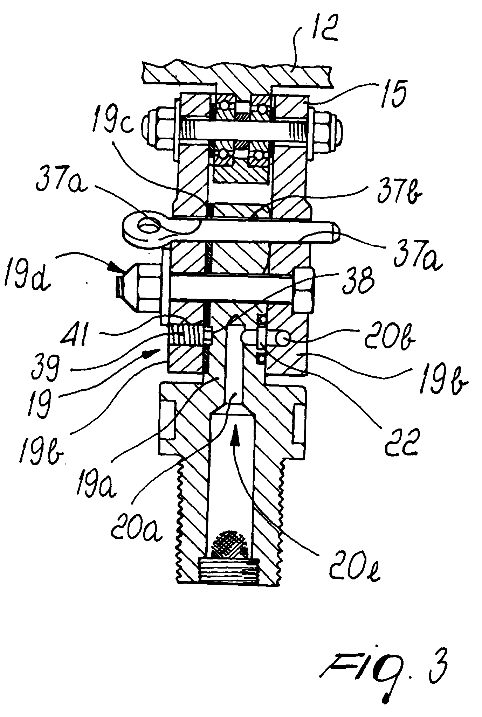

An internal duct 20 (see Figure 3) is provided in the articulation 19 for the passage of supply air for the actuation means 13, which in this case are constituted by a pneumatic cylinder generally designated by the reference numeral 21.

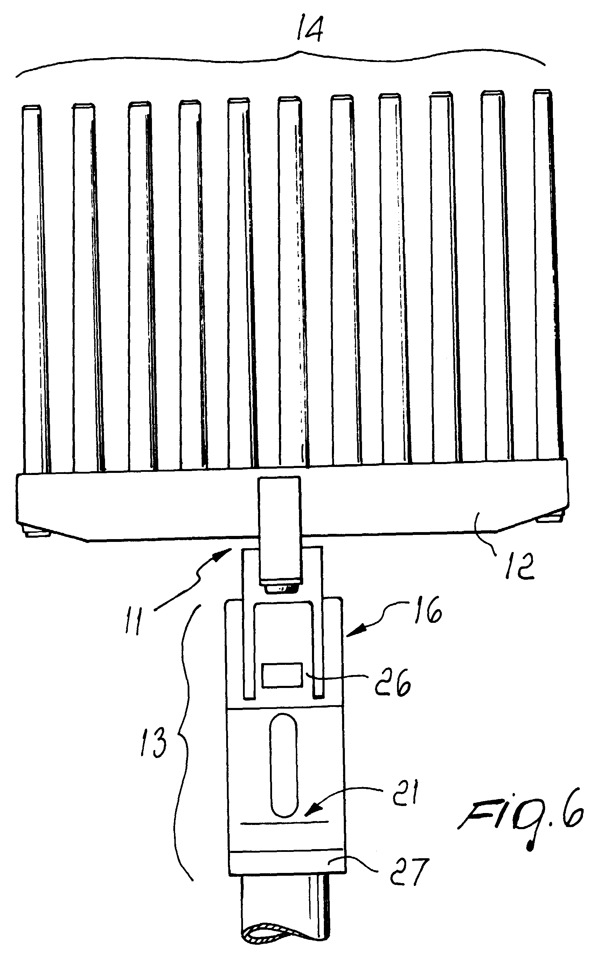

The duct 20 is composed of portions 20a and 20b, which lie respectively in the portions 19a and 19b of the articulation 19, and portions 20c and 20d, which lie within the section 16 (see Figure 5).

A filter 20e is arranged in the first portion 20a.

In the region of contact between the portions 19a and 19b there is, on one side, a semicircular recess 22 which is formed in the articulation 19 for connection between the portions 20a and 20b, and an elastomer ring 23 is placed in order to produce a seal.

On the other side, instead, a friction disk 19c is interposed which increases the friction between the surfaces, facilitating their mutual locking, which is provided by the pivoting bolt 19d.

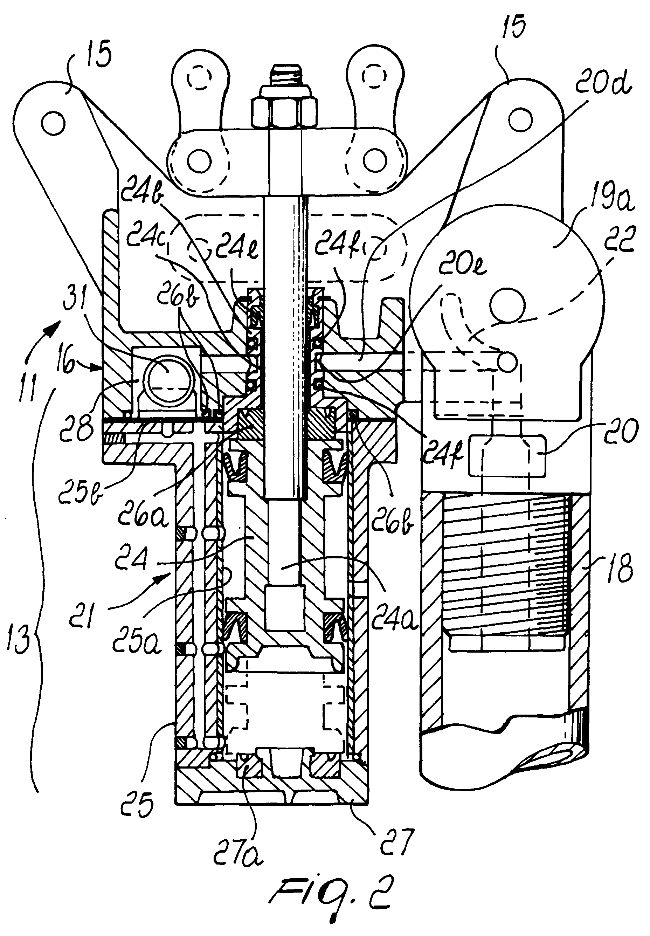

In particular, the double-acting cylinder 21 (see Figure 2) comprises a piston 24 which can slide in a lapped metallic jacket 25a which is rigidly coupled to, and placed in, a body 25 and is closed at its ends by heads, respectively a main head 26 which is monolithic with respect to the body 11 and a secondary head 27 which lies opposite thereto.

The stem 24a of the piston 24 is guided, in its reciprocating movement, by a bush 24b which is shaped so as to accommodate an antifriction and self-lubricating bearing 24c, a sealing gasket and scraper ring 24e, and two sealing gaskets 24f at a groove 20e which acts as a manifold for the passage of air from the duct 20d to the recess 28 of the slide valve 31 and cools the portion affected by the sliding of the stem 24a.

Elastomer pads, designated by the reference numerals 26a and 27a respectively, for providing a cushioned stroke limit, are present in the heads 26 and 27 of the cylinder 21.

In particular, the seat of said pad 26a is located in the bush 24b.

A stainless steel plate 25b is interposed between the head of the body 25 and the main head 26 and ensures flatness in case of uneven regions produced by the injection-molding of the two components and the seal with elastomer gaskets 26b which are arranged in the main head 26 in the air passage regions.

The plate 25b constitutes the sliding surface for the secondary plate of the slide valve 31 which will be described in greater detail hereinafter.

A double-adhesive tape, not shown in the figures, is interposed between the plate 25b and the body 25.

An elliptical recess 28 is formed in the main head 26 (which is a part of the section 16) and is connected to two mutually opposite lapped coaxial cylindrical seats 29 and 30 for accommodating, as a whole, a five-way slide valve 31 which is laterally axially offset with respect to the axis of the cylinder 21.

The cylindrical seats 29 and 30 lead to opposite positions of the main head 26 and are closed by screwed-on plugs 29a and 30a, each of which is provided with an elastomer pad 20b and 30b for providing a cushioned stroke limit for the slide valve 31.

In particular, the articulation 19, in this embodiment, lies proximate to the articulation 32 of one of the two sectors 12 to the body 11 and lies opposite the slide valve 31 with respect to the axis of the cylinder 21.

Supply ducts 33, 34 and 35 are also formed in said cylinder 21 and partially in the main head 26 and, by intersecting with respective end ducts, switch the supplies between the slide valve 31 and the cylinder 21 and viceversa.

As mentioned, the main head 26 is monolithic to the body 11 and the portions 20c and 20d (see Figure 5) of the duct for connecting the air supply between the articulation 19 and said slide valve 31 are provided therein.

Said slide valve is constituted by a cylindrical element 31a, which can slide in the seats 29 and 30, and by an elliptical secondary plate 31b which is rigidly coupled thereto and is arranged adjacent to the plate 25b and to the outlets of the ducts 33, 34 and 35 formed therein.

The secondary plate 31b has a concave portion 31e which comprises the space between two consecutive outlets in order to alternately connect them.

The coupling between the cylindrical element 31a and the secondary plate 31b is provided by a tab 31c which has an H-shaped cross-section, protrudes from said secondary plate and enters a complementarily shaped seat 31d of the cylindrical element.

The two mutually opposite wings of the H-shaped cross-section are perpendicular to the sliding axis of the slide valve 31.

In this manner, the cylindrical element 31a determines, during sliding, traction in both directions with the two wings of the H-shaped cross-section of the tab 31c which act proximate to the sliding surface, minimizing the torsional components and allowing adhesion, and therefore an annular seal, on the exchange surface of the distribution circuit.

In the handling pole 18, the articulation can be locked at preset angles of inclination thanks to the presence, in the portions 19a and 19b of the articulation 19, of through holes 37a and 37b for a pin 40.

The holes 37b are distributed along respective circular arcs which subtend angles of 30 sexagesimal degrees.

The pin 40 can be inserted through the holes 37a and 37b that are arranged coaxially.

The articulation 19 has, in the portion 19a, a semicircular groove 38 for limiting the movement arc by means of a grub screw 39 which is screwed in a corresponding hole 41 of the portion 19b.

In practice it has been found that the present invention has achieved the intended aim and objects.

In particular, it should be observed that the structure of the tool according to the invention is particularly balanced in terms of masses, allowing easy handling by the operator.

It should also be observed that the integration of the internal air duct at the articulation avoids the presence of an external hose for connection between the pole 18 and the cylinder 21, which has the problem of easily catching in the branches, and makes the structure of the tool according to the present invention more compact and functionally useful, said tool being highly flexible in application.

The main head, by being monolithic with the supporting body, also facilitates the reduction of space occupation.

It should also be observed that the tool according to the present invention, notwithstanding its basic constructive simplicity, is structurally strong and suitable even for long and continuous work cycles.

It should also be observed that its constructive simplicity leads to its production at costs which are competitive with respect to tools having similar functions.

The present invention is susceptible of numerous modifications and variations, all of which are within the scope of the inventive concept.

The technical details may be replaced with other technically equivalent elements.

The materials and the dimensions may be any according to requirements.

The disclosures in Italian Patent Applications No. PD99A000102 and PD99A000251 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A harvesting tool, particularly for gathering olives or similar agricultural products, of the type that comprises two mutually opposite oscillating sectors (12) which are articulated to a supporting body (11) and are connected to actuation means (13), a corresponding plurality of rods (14) being fixed to each one of said sectors (12) in a rake-like arrangement, said tool (10) being characterized in that said body (11) comprises three sections: a first section (15) for supporting said sectors (12); a second section (16) for coupling to said actuation means (13); and a third section (17) for connection to a handling pole (18) which is articulated by way of a hinge-type articulation (19) including an internal duct (20) for the passage of supply air for said actuation means (13), which are constituted by at least one pneumatic cylinder (21).

2. The tool according to claim 1, characterized in that said cylinder (21) comprises a piston (24) whose stem (24a) can slide in a cylindrical jacket (25a) which is closed at its ends by heads, respectively a main head (26) which is monolithic to said second section (16) of said body (11) and an opposite secondary head (27), a recess (28) being formed in said main head (26) and being suitable to form the seats (29, 30) for a slide valve (31).

3. The tool according to claim 1, characterized in that said slide valve (31) is arranged proximate to the articulation (19) of one of said sectors (12) to said body (11) in order to allow better mass balancing.

4. The tool according to claim 1, characterized in that said slide valve (31) is arranged in said main head (26), proximate to said (21) cylinder and opposite said articulation (19) for said handling pole (18).

5. The tool according to one or more of the preceding claims, characterized in that said actuation pole (18) is pivoted to said third section (17) in the region of said support (11) that is not connected to said actuator (13).

6. The tool according to one or more of the preceding claims, characterized in that the internal air supply duct (20) of said articulation (19) is composed of segments (20a, 20b) which lie in a sealed jointing portion (19a, 19b) of the articulation (19) and of segments (20c, 20d) which lie in the other portions of the second section (16) of said support (11).

7. The tool according to one or more of the preceding claims, characterized in that in the region of contact between the articulated portions (19a, 19b) that constitute said articulation (19) there is a semicircular recess (22) which is formed in one of said portions for connection between consecutive segments (20a, 20b) of said internal supply duct (20), and in that an elastomer ring (23) is arranged in order to provide a seal.

8. The tool according to one or more of the preceding claims, characterized in that said articulation (19) can be set to preset mutual positions of its components by virtue of the presence therein of through holes (37a, 37b) and of a pin (40) to be inserted between said holes (37a, 37b) that are arranged coaxially and coincide at the chosen position.

9. The tool according to claim 1, characterized in that elastomer pads (26a, 27a) are arranged in corresponding seats of the heads (26, 27) of said cylinder (21) for the cushioned abutment of the corresponding piston (24).

10. The tool according to claim 1, characterized in that said cylinder (21) comprises a piston (24) whose stem can slide in a metallic cylindrical jacket (25a) contained in a body (25) made of engineering polymer and is closed at its ends by heads (26, 27), respectively a main head (26) which is monolithic with respect to said second section (16) of said body (25) and a secondary opposite head (27), an elliptical recess (28) being formed in said main head (26) and being connected to two mutually opposite coaxial cylindrical seats (29, 30) for accommodating, as a whole, a five-way slide valve (31) which is laterally axially offset with respect to the axis of said cylinder (21).

11. The tool according to claim 10, characterized in that said cylindrical seats (29, 30) lead onto mutually opposite positions of the main head (26) and are closed by screwed-on plugs (29a, 30a), each of which supports an elastomer pad (20b, 30b) for cushioning the end of the stroke of said slide valve (31).

12. The tool according to claim 10, characterized in that said slide valve (31) is constituted by a cylindrical element (31a) which can slide in the cylindrical seats (29, 30) arranged opposite to said elliptical recess (28) and by an elliptical secondary plate (31b) which is joined to it and is arranged adjacent to said body (25) and to the outlets of the ducts (33, 34, 35) to be connected.

13. The tool according to claim 12, characterized in that said elliptical secondary plate (31b) has a concave portion (31c) which comprises the space between two consecutive said outlets in order to alternatively connect them.

14. The tool according to claim 12, characterized in that the coupling between said cylindrical element (31a) and said elliptical secondary plate (31b) is provided by a tab (31c) which has an H-shaped cross-section and protrudes from said secondary plate (31b) and enters a complementarily shaped seat (31d) of the cylindrical element (31a), the two mutually opposite wings of the H-shaped cross-section being arranged at right angles to the sliding axis of said slide valve (31).

15. The tool according to one or more of the preceding claims, characterized in that a stainless steel plate (25b) is interposed between said body (25) and said main head (26), which are made of an engineering polymer.

16. The tool according to one or more of the preceding claims, characterized in that a double-adhesive tape is interposed between the stainless steel plate (25b) and said body (25).

17. The tool according to one or more of the preceding claims, characterized in that the stem (24a) of said piston (24) is guided in its reciprocating movement by a bush (24b) which is shaped so as to accommodate an antifriction and self-lubricating bearing (24c), a sealing gasket and scraper ring (24e) and two sealing gaskets (24f) at a groove (20e) which acts as manifold for the passage of air from the supply duct (20d) to the recess (28) of said slide valve (31) and cools the portion affected by the sliding of said stem (24a).

18. The tool according to claim 1, characterized in that a friction disk (19c) is interposed between the contacting surfaces of the articulation (19) and increases friction, facilitating their mutual locking.
